# EUROPEAN PATENT APPLICATION

(11) **EP 4 546 834 A1**
(43) Date of publication of application: **30.04.2025**
(21) Application number: 23826579.7
(22) Date of filing: 25.06.2023
(51) Int. Cl.: H04W 8/14

(54) **COMMUNICATION METHOD AND APPARATUS, RELATED DEVICE, AND STORAGE MEDIUM**

(30) Priority: 24.06.2022 CN 202210730543
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: XIE, Fang, Beijing 100053 (CN)
(74) Representative: Maiwald GmbH
(86) International application number: PCT/CN2023/102075
(87) International publication number: WO 2023/246934

(57) **Abstract**

The present application discloses a communication method and apparatus, a primary node, a secondary node, a terminal, and a storage medium. The method comprises: the primary node negotiates first information with the secondary node or sends first information to the secondary node, the first information comprising information related to a configuration upper limit of candidate primary secondary cells which may be configured for the terminal.

## Description

### CROSS-REFERENCE TO RELATED APPLICATIONS

This application is based upon and claims priority to Chinese Patent Application No. 202210730543.3, filed with the State Intellectual Property Office of P. R. China on June 24, 2022, the entire contents of which are incorporated herein by reference.

### TECHNICAL FIELD

The disclosure relates to a field of wireless communication, and particularly to a communication method, a communication device, a related device, and a storage medium.

### BACKGROUND

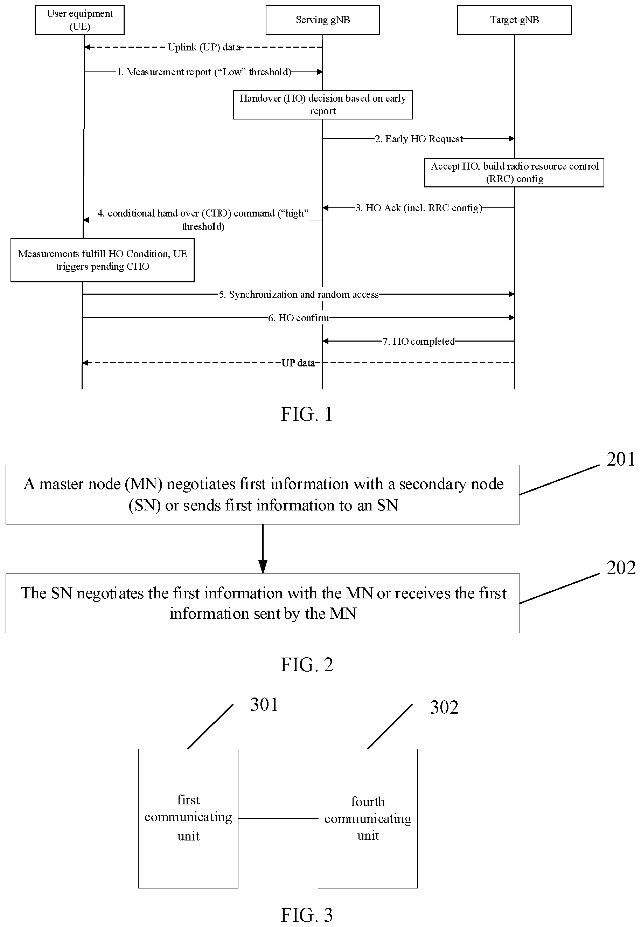

A conditional hand over (CHO) is a mechanism to enhance the robustness of the handover process, which may avoid that a user equipment (UE) can't complete the handover process normally when a channel between the UE and a serving cell suddenly deteriorates (particularly in a high frequency scenario or a UE high-velocity moving scenario). Particularly, as illustrated in FIG. 1, a base station may configure the UE to trigger a measurement reporting at a low threshold and carry a high threshold to trigger a handover in a handover command, and also carry a random access resource used by the UE in a target cell. Once the handover threshold is met, the UE initiates a random access process to a target base station. Similarly, for a multi-connection (such as dual-connection) scenario, in order to improve the robustness of a primary secondary cell (PSCell) addition or change, a conditional PSCell addition (CPA) and a conditional PSCell change (CPC) are processes of automatically performing the PSCell addition or change when the terminal detects that a target PSCell meets a condition after a master node (MN) or a secondary node (SN) in the network side sends the condition of the PSCell addition or change to the terminal in advance.

There is no effective technical solution for how the terminal simultaneously considers both the CHO and the CPA/CPC in the related art.

### SUMMARY

To solve relevant technical problems, embodiments of the disclosure provide a communication method and a communication device, a related device, and a storage medium.

The technical solution of the disclosure is implemented as follows.

Embodiments of the disclosure provide a communication method, applied to a master node (MN), including: negotiating first information with a secondary node (SN) or sending first information to an SN, the first information including configuration of upper bound relevant information of a candidate primary secondary cell (PSCell) configurable for a terminal.

In the above solution, the first information includes at least one of: a maximum quantity of the candidate PSCell; a maximum quantity of a candidate frequency; a maximum quantity of a candidate measurement identity; a maximum quantity of a candidate PSCell at each frequency; or a maximum quantity of a conditional PSCell change (CPC).

In the above solution, the method also includes: sending second information to the terminal, the second information indicating an association between a candidate primary cell (PCell) and the candidate PSCell.

In the above solution, sending the second information to the terminal includes: sending the second information carried by third information to the terminal; or, sending the second information to the terminal after sending third information to the terminal, the third information including at least one of: configuration information of a conditional hand over (CHO) of the terminal in a multi-connection; or configuration information of a conditional PSCell addition (CPA) or CPC.

In the above solution, the method also includes: receiving fourth information sent by the SN, the fourth information including configuration information of the candidate PSCell configured by the SN for the terminal, and the fourth information including at least one of: a quantity of the candidate PSCell; a quantity of the candidate frequency; a quantity of the candidate measurement identity; a quantity of the candidate PSCell at each frequency; or a quantity of the CPC.

Embodiments of the disclosure also provide a communication method, applied to an SN, including: negotiating first information with an MN or receiving first information sent by an MN, the first information including configuration of upper bound relevant information of a candidate PSCell configurable for a terminal.

In the above solution, the first information includes at least one of: a maximum quantity of the candidate PSCell; a maximum quantity of a candidate frequency; a maximum quantity of a candidate measurement identity; a maximum quantity of a candidate PSCell at each frequency; or a maximum quantity of a CPC.

In the above solution, the method also includes: sending second information to the terminal, the second information indicating an association between a candidate PCell and the candidate PSCell.

In the above solution, sending the second information to the terminal includes: sending the second information carried by fifth information to the terminal; or, sending the second information to the terminal after sending fifth information to the terminal, the fifth information including configuration information of a CPC.

In the above solution, the method also includes: sending fourth information to the MN, the fourth information including configuration information of the candidate PSCell configured by the SN for the terminal, and the fourth information includes at least one of: a quantity of the candidate PSCell; a quantity of the candidate frequency; a quantity of the candidate measurement identity; a quantity of the candidate PSCell at each frequency; or a quantity of the CPC.

Embodiments of the disclosure also provide a communication method, applied to a terminal, including: receiving second information sent by an MN and/or an SN, the second information indicating an association between a candidate PCell and a candidate PSCell.

In the above solution, receiving the second information sent by the MN includes: receiving the second information carried by third information sent by the MN; or, receiving the second information sent by the MN after receiving third information sent by the MN, the third information including at least one of: configuration information of a CHO of the terminal in a multi-connection; or configuration information of a CPA or CPC.

In the above solution, receiving the second information sent by the SN includes: receiving the second information carried by fifth information sent by the SN; or, receiving the second information sent by the SN after receiving fifth information sent by the SN, the fifth information including configuration information of a CPC.

In the above solution, the method also includes: performing measurement preferentially on a candidate PSCell associated with the candidate PCell in the case that a CHO of a PCell is triggered.

In the above solution, the method also includes: not performing a measurement on a candidate PSCell that is not associated with the candidate PCell.

In the above solution, the method also includes: performing a CHO of a PCell preferentially in the case that the CPC or CPA and the CHO of the PCell are triggered simultaneously.

In the above solution, the method also includes: performing measurement preferentially on a first candidate PSCell associated with the candidate PCell in the case that a CHO of a PCell fails and the first candidate PCell is selected.

Embodiments of the disclosure also provide a communication device, configured in an MN, including: a first communicating unit, configured to negotiate first information with an SN or send first information to an SN, the first information including configuration of upper bound relevant information of a candidate PSCell configurable for a terminal.

Embodiments of the disclosure also provide a communication device, configured in an SN, including: a second communicating unit, configured to negotiate first information with an MN or receive first information sent by an MN, the first information including configuration of upper bound relevant information of a candidate PSCell configurable for a terminal.

Embodiments of the disclosure also provide a communication device, configured in a terminal, including: a third communicating unit, configured to receive second information sent by an MN and/or an SN, the second information indicating an association between a candidate PCell and a candidate PSCell.

Embodiments of the disclosure also provide an MN, including a first communication interface and a first processor, in which the first communication interface is configured to negotiate first information with an SN or send first information to an SN, the first information including configuration of upper bound relevant information of a candidate PSCell configured for a terminal.

Embodiments of the disclosure also provide an SN, including a second communication interface and a second processor, in which the second communication interface is configured to negotiate first information with an MN or receive first information sent by an MN, the first information including configuration of upper bound relevant information of a candidate PSCell configurable for a terminal.

Embodiments of the disclosure also provide a terminal, including: a third communication interface and a third processor, in which the third communication interface is configured to receive second information sent by an MN and/or an SN, the second information indicating an association between a candidate PCell and a candidate PSCell.

Embodiments of the disclosure also provide an MN, including a first processor and a first memory for storing a computer program capable of running on a processor. When the first processor is configured to run the computer program, any step of the above method in the MN side is performed.

Embodiments of the disclosure also provide an SN, including a second processor and a second memory for storing a computer program capable of running on a processor. When the second processor is configured to run the computer program, any step of the above method in the SN side is performed.

Embodiments of the disclosure also provide a terminal, including a third processor and a third memory for storing a computer program capable of running on a processor. When the third processor is configured to run the computer program, any step of the above method in the terminal side is performed.

Embodiments of the disclosure also provide a storage medium for storing a computer program. When the computer program is executed by a processor, any step of the above method in the MN side is implemented, or any step of the above method in the SN side is implemented, or any step of the above method in the terminal side is implemented.

Embodiments of the disclosure also provide a communication method, a communication device, a related device, and a storage medium. An MN negotiates first information with an SN or sends first information to an SN. The SN negotiates the first information with the MN or receives the first information sent by the MN, in which the first information includes configuration of upper bound relevant information of a candidate PSCell configurable for a terminal. According to the solution in embodiments of the disclosure, since the MN negotiates with the SN about the configuration of the upper bound relevant information of the candidate PSCell configured by the SN for the terminal, or the MN directly informs the configuration of the upper bound relevant information of the candidate PSCell configurable for the terminal, a measurement corresponding to a total relevant configuration of the CHO of the PCell and the CPA or CPC of the PSCell of the terminal does not exceed a maximum measurement capability of the terminal. From the perspective of the terminal, both the CHO and the CPA/CPC are considered.

### BRIEF DESCRIPTION OF THE DRAWINGS

FIG. 1 is a flow chart illustrating a conditional hand over (CHO) in the related art.
FIG. 2 is a flow chart illustrating a communication method according to an embodiment of the disclosure.
FIG. 3 is a block diagram illustrating a communication device according to an embodiment of the disclosure.
FIG. 4 is block diagram illustrating a communication device according to another embodiment of the disclosure.
FIG. 5 is a block diagram illustrating a communication device according to a third embodiment of the disclosure.
FIG. 6 is a block diagram illustrating a master node (MN) according to an embodiment of the disclosure.
FIG. 7 is a block diagram illustrating a secondary node (SN) according to an embodiment of the disclosure.
FIG. 8 is a block diagram illustrating a terminal according to an embodiment of the disclosure.
FIG. 9 is a block diagram illustrating a communication system according to an embodiment of the disclosure.

### DETAILED DESCRIPTION

Description is further made in detail below to the disclosure with reference to the accompanying drawings and embodiments.

In a multi-connection (such as dual-connection) scenario, it is not supported in the related art that a conditional hand over (CHO) of a primary cell (PCell), and a primary secondary cell (PSCell) change (CPC) or a PSCell addition (CPA) of a PSCell are configured for a terminal simultaneously. In other words, from the perspective of the terminal, the terminal may not consider both the CHO and the CPA/CPC.

Based on this, in various embodiments of the disclosure, a work mechanism for configuring both the CHO of the PCell and the CPC/CPA of the PSCell for the terminal is proposed. In detail, a master node (MN) negotiates with a secondary node (SN) about configuration of upper bound relevant information of a candidate PSCell which may be configured by the SN for the terminal, or the MN directly informs configuration of upper bound relevant information of a candidate PSCell configurable for a terminal. In this way, a measurement corresponding to a total relevant configuration of both the CHO of the PCell and the CPA or CPC of the PSCell configured for the terminal does not exceed a maximum measurement capability of the terminal. From the perspective of the terminal, both the CHO and the CPA/CPC are considered.

Embodiments of the disclosure provide a communication method, applied to an MN, including: negotiating first information with an SN or sending first information to an SN. The first information includes configuration of upper bound relevant information of a candidate PSCell configurable for a terminal.

In a practical application, the first information may include the configuration of the upper bound relevant information of the candidate PSCell which may be configured by the SN for the terminal.

In a practical application, the terminal may be called a user equipment (UE) or a user device.

In a practical application, a detailed implementation that the MN negotiates the first information with the SN may be set based on a requirement, which is not bounded in embodiments of the disclosure. For example, the MN may directly send the first information to the SN, and the SN may reply a confirmation message after receiving the first information. Alternatively, the MN sends the configuration of the upper bound relevant information of the candidate PSCell configurable for the terminal to the SN once, and the SN needs to adjust all or some of the configuration of the upper bound relevant information received. At this time, the SN sends an adjustment request for adjusting the all or some of the configuration of the upper bound relevant information received to the MN. The adjustment request may carry some information that the SN wants to configure for the terminal, for example, carry a quantity of the candidate PSCell; a quantity of the candidate frequency; a quantity of the candidate measurement identity (may also be called candidate measurement identities); a quantity of the candidate PSCell at each frequency; or a quantity of the CPC that the SN wants to configure for the terminal. Next, after receiving the adjustment request sent by the SN, the MN may send the configuration of the upper bound relevant information (that is, a maximum quantity) of the candidate PSCell that the SN may configure after adjusting. Here, it should be noted that, in a practical application, the maximum quantity adjusted by the MN may be consistent with (that is, the same as) the quantity that the SN requires to adjust, or may be inconsistent with the quantity that the SN requires to adjust, which mainly depends on the detailed implementation of the MN. Alternatively, the SN may inform the MN that a CPC configuration process initiated by the SN begins. Alternatively, the SN may inform the MN of the configuration information of the candidate PSCell configured by the SN for the terminal (referred to as fourth information in the following description), and then the MN sends the first information to the SN. The fourth information may include at least one of: the quantity of the candidate PSCell; the quantity of the candidate frequency; the quantity of the candidate measurement identity; the quantity of the candidate PSCell at each frequency; or the quantity of the CPC.

In a practical application, the application that the MN sends the first information to the SN may be understood that the MN directly informs the first information of the SN, that is, the MN directly indicates a configuration upper bound of the candidate PSCell configured for the terminal to the SN.

Here, before the MN sends the first information to the SN, the SN may inform the MN of the configuration information of the candidate PSCell configured by the SN for the terminal, that is, the MN receives the fourth information sent by the SN. The fourth information includes configuration information of the candidate PSCell configured by the SN for the terminal. Then the MN sends the first information to the SN. The fourth information may include at least one of: a the of the candidate PSCell; the quantity of the candidate frequency; the quantity of the candidate measurement identity; the quantity of the candidate PSCell at each frequency; or the quantity of the CPC.

In a practical application, the configuration upper bound of the candidate PSCell configured by the SN for the terminal may depend on a measurement capability of the terminal and the configuration of the CHO and the CPA/CPC. In other words, the MN and/or the SN may determine the configuration upper bound of the candidate PSCell configured by the SN for the terminal, that is, determine the first information, based on the measurement capability or a predefined UE capability reported by the terminal to a network side, and the CHO and the CPA/CPC configured by the MN for the terminal, such that the measurement corresponding to the total relevant configuration of the candidate PCell and candidate PSCell does not exceed a total measurement capability of the terminal (that is, the maximum measurement capability of the terminal). Here, the relevant configuration of the candidate PCell may also be understood as a relevant configuration of a candidate master cell group (MCG) or the MN; the relevant configuration of the candidate PSCell may also be understood as a relevant configuration of a candidate secondary cell group (SCG) or the SN; and the total relevant configuration of the candidate PCell and candidate PSCell may also be understood as the total relevant configuration of the CHO of the PCell and the CPA or CPC of the PSCell.

In an embodiment, the first information includes at least one of: a maximum quantity of the candidate PSCell; a maximum quantity of the candidate frequency; a maximum quantity of the candidate measurement identity; a maximum quantity of the candidate PSCell at each frequency; or a maximum quantity of the CPC.

In a practical application, the MN and the SN may communicate via an Xn interface, that is, the MN may negotiate the first information with the SN via the Xn interface, or the MN may send the first information to the SN via the Xn interface.

In an embodiment, the method also includes: sending second information to the terminal. The second information indicates an association between the candidate PCell and the candidate PSCell.

In a practical application, the MN may send the second information to the terminal via a radio resource control (RRC) reconfiguration signaling.

In some scenarios, the MN, the MCG, and the Pcell are identical, and correspondingly, the SN, the SCG, and the PScell are identical. Therefore, the second information may be expressed in various forms, for example, any one of: an association between the candidate PCell and the candidate PSCell; an association between the candidate PCell and a candidate SN; an association between the candidate PCell and a candidate SCG; an association between a candidate MN and the candidate PSCell; an association between a candidate MN and a candidate SN; an association between a candidate MN and a candidate SCG; an association between a candidate MCG and the candidate PSCell; an association between a candidate MCG and a candidate SN; or an association between a candidate MCG and a candidate SCG.

It should be noted that, the representation of the second information is not bounded in embodiments of disclosure, as long as a function of the second information is implemented. For example, the second information may include that: MCG 1/ PCell 1/MN 1 has an association with SCG 1/PSCell 1/SN 1 and SCG 2/PSCell 2/SN 2.

In a practical application, the association indicated by the second information may be used to perform a multi-connection (such as a dual-connection, a triple-connection and the like). For example, the second information may include that the MCG 1/ PCell 1/MN 1 performs the dual-connection with the SCG 1/PSCell 1/SN 1 and the SCG 2/PSCell 2/SN 2.

In a practical application, the association indicated by the second information may help the terminal to consider both the CHO and the CPA/CPC. Therefore, the MN may send the second information carried by relevant configuration information of the CHO and/or the CPA/CPC (referred to as third information in following description) to the terminal.

Based on this, in an embodiment, sending the second information to the terminal may include: sending the second information carried by the third information to the terminal. The third information includes at least one of: configuration information of a CHO of the terminal in the multi-connection; or configuration information of the CPA or CPC.

In a practical application, the MN may also send the second information to the terminal after sending the third information to the terminal.

Based on this, in an embodiment, sending the second information to the terminal includes: sending the second information carried by third information to the terminal.

In a practical application, in the case that the second information is sent to the terminal, since the terminal may know the association between the candidate PCell and the candidate PSCell, when the configuration upper bound of the candidate PSCell configured by the SN for the terminal is determined, it may only be considered that the measurement corresponding to the total relevant configuration of the candidate PCell and the candidate PSCell associated with the candidate PCell does not exceed the maximum measurement capability of the terminal, and there no need to consider relevant configuration of other candidate PSCells than the candidate PCell associated with the candidate Pcell. In other words, there no need to consider that a measurement corresponding to a total relevant configuration of all candidate PCells and all candidate PSCells does not exceed the maximum measurement capability of the terminal.

Here, it may be understood that, in the case that the configuration upper bound of the candidate PSCell configured by the SN for the terminal is determined, since the second information is not sent to the terminal, there need to consider that the measurement corresponding to the total relevant configuration of all the candidate PCells and all the candidate PSCells does not exceed the maximum measurement capability of the terminal. However, in the case that the second information is sent to the terminal, there only need to consider that the measurement corresponding to the total relevant configuration of the candidate PCell and the candidate PSCell associated with the candidate PCell does not exceed the maximum measurement capability of the terminal. Therefore, the total quantity of the candidate PCell and the candidate PCell that may be configured for the terminal in the network side in the scenario where the second information is sent to the terminal is more than the total quantity of all the candidate PCells and all the candidate PCells that may be configured for the terminal in the network side in the scenario where the second information is not sent to the terminal. In other words, in the case that the second information is sent to the terminal, the network side may configure more candidate PCells and candidate PSCells for the terminal, which may further enhance the robustness of the handover process. For example, it is assumed that the network side configures the terminal with 3 candidate MCG (that is, an MCG1, an MCG2, and an MCG3) CHOs and 6 candidate SCG CPAs/CPCs (one CPC may be configured with at least one candidate PSCell), that is, the terminal has configuration information for 3 candidate MCG CHOs and 6 candidate SCG CPAs/CPCs. In the case that the network side does not configure the second information for the terminal, a measurement sum of all cells corresponding to the 3 candidate MCG CHOs and the 6 candidate SCG CPAs/CPCs may not exceed the maximum measurement capability of the terminal. In the case that the network side configures the second information for the terminal, assuming that there is an association between the MCG1 and both an SCG1 and an SCG2, there is an association between the MCG2 and both an SCG3 and an SCG4, and there is an association between the MCG3 and both an SCG5 and an SCG6, there only needs that the sum of the measurement of all cells corresponding to the MCG1 CHO, the SCG1 CPA/CPC, and the SCG2 CPA/CPC does not exceed the maximum measurement capability of the terminal; there only needs that the sum of the measurement of all cells corresponding to the MCG2 CHO, the SCG3 CPA/CPC, and the SCG4 CPA/CPC does not exceed the maximum measurement capability of the terminal; and/or there only needs that the sum of the measurement of all cells corresponding to the MCG3 CHO, the SCG5 CPA/CPC, and the SCG6 CPA/CPC does not exceed the maximum measurement capability of the terminal.

Accordingly, embodiments of the disclosure also provide a communication method, applied to an SN, including: negotiating first information with an MN or receiving first information sent by an MN. The first information includes configuration of upper bound relevant information of a candidate PSCell configurable for a terminal.

In a practical application, as mentioned above, the MN may send the second information to the terminal, and the SN may also send the second information to the terminal.

Based on this, in an embodiment, the method also includes: sending second information to the terminal. The second information indicates an association between a candidate PCell and the candidate PSCell.

In a practical application, the association between the candidate PCell and the candidate PSCell may be determined by the MN or the SN based on a history condition of performing the multi-connection, or may be informed to the MN and/or the SN by a network management device, such that the MN and/or the SN may obtain the association between the candidate PCell and the candidate PSCell, which is not bounded in embodiments of the disclosure.

In a practical application, the SN may send the second information to the terminal via an RRC reconfiguration signaling.

In a practical application, in the process when the SN negotiates the first information with the MN, or before the SN receives the first information sent by the MN, the SN may first inform the MN of the configuration information of the candidate PSCell configured by the SN for the terminal, that is, the SN sends fourth information to the MN. The fourth information includes the configuration information of the candidate PSCell configured by the SN for the terminal. Then the MN sends the first information to the SN. The fourth information may include at least one of: a quantity of the candidate PSCell; a quantity of a candidate frequency; a quantity of a candidate measurement identity; a quantity of a candidate PSCell at each frequency; or a quantity of a CPC.

In a practical application, the second information may help the terminal consider both a CHO and a CPA/CPC. Therefore, the SN may send the second information to the terminal when the configuration information of the CPC is sent to the terminal.

Based on this, in an embodiment, sending the second information to the terminal includes: sending the second information carried by fifth information to the terminal. The fifth information includes configuration information of the CPC.

Here, it should be noted that, the fifth information may be sent to the terminal before the SN negotiates the first information with the MN or the SN receives the first information sent by the MN, or the fifth information may be sent to the terminal after the SN negotiates the first information with the MN or the SN receives the first information sent by the MN. In other words, the fifth information refers to a certain piece of CPC configuration information sent by the SN to the terminal, and the CPC configuration information may be the same as or different from the content included in the fourth information, which may be set based on a requirement and is not bounded in embodiments of the disclosure. For example, after negotiating the first information with the MN or after receiving the first information sent by the MN, the SN may determine the fifth information based on the first information, and then send the fifth information to the terminal.

In a practical application, the SN may also send the second information to the terminal after sending the fifth information to the terminal.

Based on this, in an embodiment, sending the second information to the terminal includes: sending the second information to the terminal after sending the fifth information to the terminal.

Accordingly, embodiments of the disclosure also provide a communication method, applied to a terminal, including: receiving second information sent by an MN and/or an SN. The second information indicates an association between a candidate PCell and a candidate PSCell. In an embodiment, receiving the second information sent by the MN includes: receiving the second information carried by third information sent by the MN; or, receiving the second information sent by the MN after receiving third information sent by the MN. The third information includes at least one of: configuration information of a CHO of the terminal in a multi-connection; or configuration information of a CPA or CPC.

In an embodiment, receiving the second information sent by the SN includes: receiving the second information carried by fifth information sent by the SN; or, receiving the second information sent by the SN after receiving fifth information sent by the SN. The fifth information includes configuration information of the CPC.

After receiving the second information, in a scenario where a CHO of a PCell occurs (that is, in the case that a CHO of a PCell is triggered), the terminal may preferentially evaluate an appropriate candidate PSCell based on the second information, that is, measurement is performed preferentially on the candidate PSCell associated with the candidate PCell, thus saving time of the terminal to evaluate the candidate PSCell, and increasing a speed of a dual-connection after completing the CHO (since a measurement result of the PSCell is already obtained). Further, the terminal may not perform the measurement on the candidate PSCell that is not associated with the candidate PCell, thus further saving a measurement behavior of the terminal (that is, saving the time of the terminal to evaluate the candidate PSCell) and reducing the energy consumption of the terminal in the CHO. For example, when the CHO of the PCell is triggered, assuming that a candidate PCell 1 (belonging to an MN 1) satisfies a condition of the CHO, a UE may preferentially perform measurement on a PSCell1 or an SCG1 (belonging to an SN1) that is associated with a PCell1; or a PSCell2 or an SCG2 (belonging to an SN2) that is associated with a PCell1 during or after the CHO process, thus making a preparation for a new dual-connection between the MN 1 and the SN1/SN2, improving the efficiency of the UE, saving the time of a new MN looking for the SN, and providing a dual-connection service to the UE as soon as possible. In addition, the UE may not measure an SCG not associated with the PCell1, thus saving the measurement behavior of the UE.

After receiving the second information, in the scenario (may also be understood as a condition) where both the CPC of the PScell and the CHO of the PCell are triggered simultaneously, or in the scenario where both the CPA and the CHO of the PCell are triggered simultaneously, the terminal may perform the CHO of the PCell preferentially based on the second information, and hang up the CPA/CPC process performed currently (such as no longer evaluating the candidate PSCell, or no longer initiating a random access to a target PSCell or no longer initiating an RRC connection establishment process to a target PSCell), thus avoiding not performing the multi-connection with a new PCell after a PSCell addition or change succeeds, that is, avoiding an invalid operation of the terminal in the PSCell, and improving the success rate of the PSCell addition or change.

Here, the CPC/CPA of the PScell and the CHO of the PCell being triggered simultaneously may include: in the case that the CPA or the CPC is triggered, that is, in the case that the CPA or the CPC is being performed but is not succeeded, the terminal triggers the CHO of the PCell. At this point, in the case that the terminal may determine that a candidate target PCell does not have an association with a current target PSCell where the CPA or CPC is performed based on the second information, the terminal may perform the CHO of the PCell and hang up the CPA or CPC process performed currently, thus avoiding that the PSCell may not perform the multi-connection with the new PCell or MN after the PSCell addition or the PSCell change sucesses.

After receiving the second information, in a scenario where the CHO of the PCell fails and one candidate PCell is selected, measurement is performed preferentially on a candidate PSCell associated with the candidate PCell selected, that is, in the case that the CHO of the PCell fails and a first candidate PCell is selected, measurement is performed preferentially on a candidate PSCell associated with the first candidate PCell. For example, when the CHO of the PCell fails, the UE performs cell selection, assuming that a selected PCell 2 is the candidate cell of the CHO of the PCell, the UE may establish an RRC connection with the PCell 2 by the configuration information of the CHO, perform measurement preferentially on a candidate PSCell 2 or SCG2 that may perform a dual-connection with the PCell 2, and report a measurement result to an MN 2 where the PCell 2 is located, such that the MN 2 may speed up an addition preparation process of the dual-connection with the PSCell 2, the SCG 2 or the SN 2.

It should be noted that, CPA/CPC means the CPA or the CPC in the embodiments of the disclosure.

Accordingly, embodiments of the disclosure also provide a communication method, as illustrated in FIG. 2, including the following. At block 201, an MN negotiates first information with an SN or sends first information to an SN, the first information including configuration of upper bound relevant information of a candidate PSCell configurable for a terminal. At block 202, the SN negotiates the first information with the MN or receives the first information sent by the MN.

With the communication method in embodiments of the disclosure, the MN negotiates the first information with the SN or sends the first information to the SN. The SN negotiates the first information with the MN or receives the first information sent by the MN. The first information includes the configuration of the upper bound relevant information of the candidate PSCell configurable for the terminal. According to the solution in embodiments of the disclosure, since the MN negotiates with the SN about the configuration of the upper bound relevant information of the candidate PSCell configured by the SN for the terminal, or the MN directly informs the configuration of the upper bound relevant information of the candidate PSCell configurable for the terminal, the measurement corresponding to the total relevant configuration of the CHO of the PCell and the CPA or CPC of the PSCell for the terminal does not exceed the maximum measurement capability of the terminal. From the perspective of the terminal, both the CHO and the CPA/CPC are considered.

In the solution in embodiments of the disclosure, the MN and/or the SN sends second information to the terminal, in which the second information indicates an association between a candidate PCell and the candidate PSCell, thereby helping the terminal to evaluate an appropriate candidate PSCell preferentially when the CHO of the PCell occurs, thus saving the time of the terminal to evaluate the candidate PSCell, and increasing the speed of the dual-connection after the CHO completes.

Third, in embodiments of the disclosure, in the case that the CHO of the PCell is triggered before the CPA or CPC is being performed but not succeeded, and the terminal determines based on the second information that there is no association between a candidate target PCell and a current target PSCell where the CPA or CPC is being performed, the terminal may perform the CHO of the PCell, thus avoiding a failure that the terminal may not perform a dual-connection with a new PCell after the CPA or CPC succeeds, that is, avoiding an invalid operation of the terminal in the PSCell, and improving the success rate of the CPA or CPC.

In order to implement the method in the MN side in embodiments of the disclosure, embodiments of the disclosure also provide a communication device configured in an MN. As illustrated in FIG. 3, the communication device includes: a first communicating unit 301, configured to negotiate first information with an SN or send first information to an SN, the first information including configuration of upper bound relevant information of a candidate PSCell configurable for a terminal. In an embodiment, as illustrated in FIG. 3, the communication device may also include a fourth communicating unit 302, configured to send second information to the terminal, the second information indicating an association between a candidate PCell and a candidate PSCell.

In an embodiment, the fourth communicating unit 302 is also configured to send the second information carried by third information to the terminal; or, send the second information to the terminal after sending third information to the terminal, the third information including at least one of: configuration information of a CHO of the terminal in a multi-connection; or configuration information of a CPA or CPC.

In an embodiment, the first communicating unit 301 is also configured to receive fourth information sent by the SN, the fourth information including configuration information of the candidate PSCell configured by the SN for the terminal, the fourth information including at least one of: a quantity of the candidate PSCell; a quantity of the candidate frequency; a quantity of the candidate measurement identity; a quantity of the candidate PSCell at each frequency; or a quantity of the CPC.

In a practical application, the first communicating unit 301 and the fourth communicating unit 302 may be implemented by a communication interface in the communication device.

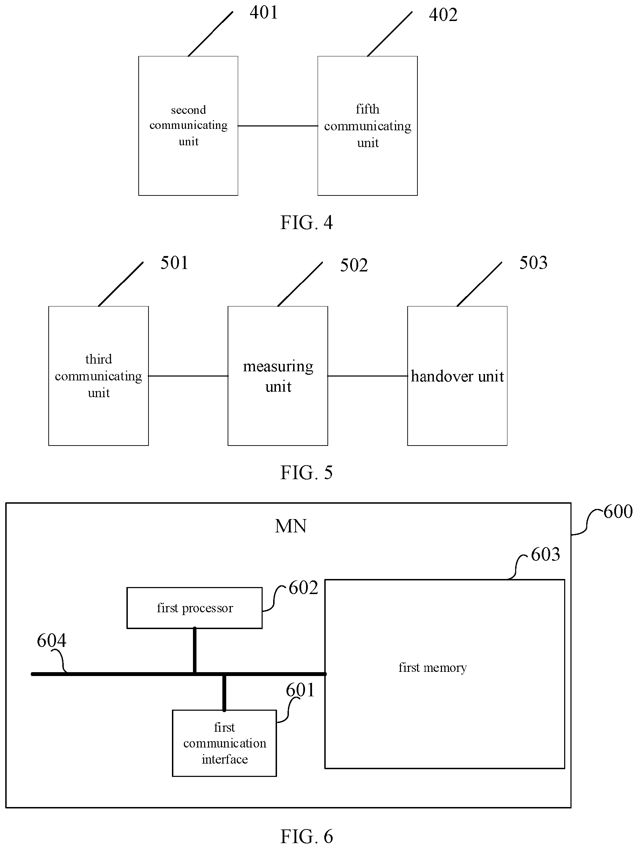

In order to implement the method in the SN side in embodiments of the disclosure, embodiments of the disclosure also provide a communication device configured in an MN. As illustrated in FIG. 4, the communication device includes: a second communicating unit 401. The second communicating unit 401 is configured to negotiate first information with an MN or receive first information sent by an MN, the first information including configuration of upper bound relevant information of a candidate PSCell configurable for a terminal. In an embodiment, as illustrated in FIG. 4, the communication device also includes a fifth communicating unit 402. The fifth communicating unit 402 is configured to send second information to the terminal, the second information indicating an association between a candidate PCell and the candidate PSCell.

In an embodiment, the fifth communicating unit 402 is also configured to send the second information carried by fifth information to the terminal; or, send the second information to the terminal after sending fifth information to the terminal, the fifth information including configuration information of a CPC.

In an embodiment, the second communicating unit 401 is also configured to send fourth information to the MN, the fourth information including configuration information of the candidate PSCell configured by the SN for the terminal. The fourth information includes at least one of: a quantity of the candidate PSCell; a quantity of the candidate frequency; a quantity of the candidate measurement identity; a quantity of the candidate PSCell at each frequency; or a quantity of the CPC.

In a practical application, the second communicating unit 401 and the fifth communicating unit 402 may be implemented by the communication interface in the communication device.

In order to implement the method in the terminal side in embodiments of the disclosure, embodiments of the disclosure also provide a communication device configured in a terminal. As illustrated in FIG. 5. The communication device includes: a third communicating unit 501, configured to receive second information sent by an MN and/or an SN, the second information indicating an association between a candidate PCell and a candidate PSCell. In an embodiment, the third communicating unit 501 is also configured to receive the second information carried by third information sent by the MN; or, receive the second information sent by the MN after receiving third information sent by the MN, the third information including at least one of: configuration information of a CHO of the terminal in a multi-connection; or configuration information of a CPA or CPC.

In an embodiment, the third communicating unit 501 is also configured to receive the second information carried by fifth information sent by the SN; or, receive the second information sent by the SN after receiving fifth information sent by the SN, the fifth information including configuration information of a CPC.

In an embodiment, as illustrated in FIG. 5, the communication device also includes: a measuring unit 502, configured to perform measurement preferentially on a candidate PSCell associated with the candidate PCell in the case that a CHO of a PCell is triggered.

**In** an embodiment, the measuring unit 502 is also configured to not perform measurement on a candidate PSCell that is not associated with the candidate PCell.

**In** an embodiment, as illustrated in FIG. 5, the communication device also includes: a handover unit 503, configured to perform a CHO of a PCell preferentially in the case that the CPC or CPA and the CHO of the PCell are triggered simultaneously.

In an embodiment, the measuring unit 502 is also configured to perform measurement preferentially on a first candidate PSCell associated with the candidate PCell in the case that a CHO of a PCell fails and the first candidate PCell is selected.

In a practical application, the third communicating unit 501 may be implemented by the communication interface in the communication device; and the measuring unit 502 and the handover unit 503 may be implemented by the processor in combination with the communication interface in the communication device.

It should be noted that when the communication device in embodiments of the disclosure performs communication, the division of the above program modules is illustrated as example. In the actual application, the above processing may be completed by allocating the above processing to different program modules based on different requirements, that is, an internal structure of the device is divided into different program modules to complete all or some of the above processing described. In addition, the communication device and the communication method in embodiments belong to the same idea. For a detailed implementation process, please refer to the method embodiments, which will not be repeated here.

Based on hardware implementation of the above program modules, and in order to implement the method in the MN side in embodiments of the disclosure, embodiments of the disclosure also provide an MN. As illustrated in FIG. 6, the MN 600 includes: a first communication interface 601; configured to exchange information with other nodes (such as an SN) in the terminal side and/or in the network side; a first processor 602, connected with the first communication interface 601 to implement the information interaction with other nodes in the terminal side and/or in the network side, and configured to perform the method in one or more technical solutions in the MN side when configured to run a computer program; and a first memory 603, the computer program being stored in the first memory 603.

In detail, the first communication interface 601 is configured to negotiate first information with an SN or send first information to an SN, the first information including configuration upper bound relevant information of a candidate PSCell configurable for a terminal. In an embodiment, the first communication interface 601 is also configured to send second information to the terminal. The second information indicates an association between a candidate PCell and the candidate PSCell.

In an embodiment, the first communication interface 601 is also configured to send the second information carried by third information to the terminal; or, send the second information to the terminal after sending third information to the terminal, the third information including at least one of: configuration information of a CHO of the terminal in a multi-connection; or configuration information of a CPA or CPC.

**In** an embodiment, the first communication interface 601 is also configured to receive fourth information sent by the SN, the fourth information including configuration information of the candidate PSCell configured by the SN for the terminal. The fourth information includes at least one of: a quantity of the candidate PSCell; a quantity of the candidate frequency; a quantity of the candidate measurement identity; a quantity of the candidate PSCell at each frequency; or a quantity of the CPC.

It should be noted that the detailed process of the first communication interface 601 may be understood with reference to the above method, which will not be repeated here.

Of course, in the actual application, components in the MN 600 are coupled together by a bus system 604. It is understood that the bus system 604 is configured to implement the connection communication between these components. Besides data buses, the bus system 604 also includes a power bus, a control bus and a status signal bus. However, for clarity, each bus is labeled as the bus system 604 in FIG. 6.

The first memory 603 in embodiments of the disclosure is configured to store various types of data to support the operation of the MN 600. Examples of such data include any computer program configured to operate in the MN 600.

The method in embodiments of the disclosure may be applied to, or implemented by, the first processor 602. The first processor 602 may be an integrated circuit chip with a signal processing capability. In the implementation process, each step of the method may be completed by an integrated logic circuit of the hardware or instructions in the form of software in the first processor 602. The first processor 602 may be a general-purpose processor, or a digital signal processor (DSP); or other programmable logic device, a split gate or transistor logic device, a discrete hardware component, etc. The first processor 602 may implement or execute the method, steps and logic block diagrams disclosed in embodiments of the disclosure. The general-purpose processor may be a microprocessor or any regular processor. It may be directly embodied that he steps in combination with the method in embodiments of the disclosure may be completed by the execution by a hardware decoding processor, or by a combination of hardware and software modules in a decoding processor. The software module may be located in a storage medium, and the storage medium is located in the first memory 603. The first processor 602 reads the information in the first memory 603 and completes the steps of the above method in combination with the hardware of the first processor 602.

In an exemplary embodiment, the MN 600 may be implemented by one or more application specific integrated circuits (ASIC), DSPs, programmable logic devices (PLD), complex programmable logic devices (CPLD), field programmable gate arrays (FPGA), general-purpose processors, controllers, micro controller units (MCU), microprocessors, or other electronic components, to perform the above method.

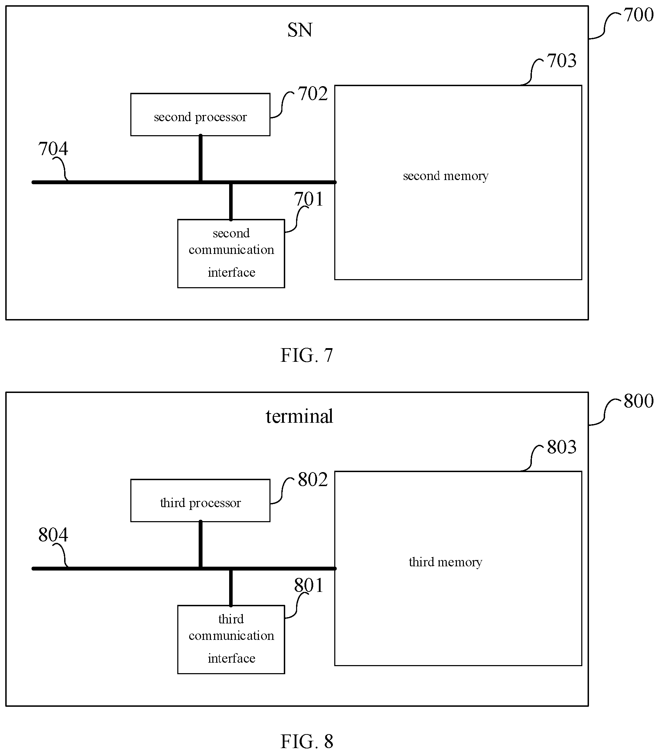

Based on the hardware implementation of the above program modules and in order to implement the method in the SN side in embodiments of the disclosure, embodiments of the disclosure also provide an SN. As illustrated in FIG. 7, the SN 700 includes: a second communication interface 701, configured to exchange information with other nodes (such as MN) in the terminal side and/or in the network side; the second processor 702, connected with the second communication interface 701 to implement the information interaction with other nodes in the terminal side and/or in the network side, and configured to perform the method in one or more technical solutions in the SN side when configured to run a computer program; and a second memory 703, the computer program being stored in the second memory 703.

**In** detail, the second communication interface 701 is configured to negotiate first information with an MN or receive first information sent by an MN, the first information including configuration of upper bound relevant information of a candidate PSCell configurable for a terminal. In an embodiment, the second communication interface 701 is also configured to send second information to the terminal, the second information indicating an association between a candidate PCell and the candidate PSCell.

**In** an embodiment, the second communication interface 701 is also configured to send the second information carried by fifth information to the terminal; or, send the second information to the terminal after sending fifth information to the terminal, the fifth information including configuration information of a CPC.

**In** an embodiment, the second communication interface 701 is also configured to send fourth information to the SN, the fourth information including configuration information of the candidate PSCell configured by the SN 700 for the terminal. The fourth information includes at least one of: a quantity of the candidate PSCell; a quantity of the candidate frequency; a quantity of the candidate measurement identity; a quantity of the candidate PSCell at each frequency; or a quantity of the CPC.

It should be noted that the detail process of the second communication interface 701 may be understood with reference to the above method, which will not be repeated here.

Of course, in the actual application, components in the SN 700 are coupled together by a bus system 704. It is understood that the bus system 704 is configured to implement the connection communication between these components. Besides data buses, the bus system 704 also includes a power bus, a control bus and a status signal bus. However, for clarity, each bus is labeled as the bus system 704 in FIG. 7.

The second memory 703 in embodiments of the disclosure is configured to store various types of data to support the operation of the SN 700. Examples of such data include any computer program configured to operate on the SN 700.

The method in embodiments of the disclosure may be applied to, or implemented by, the second processor 702. The second processor 702 may be an integrated circuit chip with a signal processing capability. In the implementation process, each step of the method may be completed by an integrated logic circuit of the hardware or instructions in the form of software in the second processor 702. The second processor 702 may be a general-purpose processor, or a DSP; or other programmable logic device, a split gate or transistor logic device, a discrete hardware component, etc. The second processor 702 may implement or execute the method, steps and logic block diagrams disclosed in embodiments of the disclosure. The general-purpose processor may be a microprocessor or any regular processor. It may directly embodied that the steps in combination with the method in embodiments of the disclosure may be completed by the execution by a hardware decoding processor, or by a combination of hardware and software modules in a decoding processor. The software module may be located in a storage medium, and the storage medium is located in the second memory 703. The second processor 702 reads the information in the second memory 703 and completes the steps of the above method in combination with the hardware of the second processor 702.

In an exemplary embodiment, the SN 700 may be implemented by one or more ASICs, DSPs, PLDs, CPLDs, FPGAs, general-purpose processors, controllers, MCUs, microprocessors, or other electronic components to perform the above method.

Based on the hardware implementation of the above program modules and in order to implement the method in the terminal side in embodiments of the disclosure, embodiments of the disclosure also provide a terminal. As illustrated in FIG. 8, the terminal 800 includes: a third communication interface 801, configured to exchange information with other nodes (such as MN and/or SN) in the terminal side and/or in the network side; a third processor 802, connected with the third communication interface 801 to enable the information interaction with other nodes in the terminal side and/or in the network side, and configured to perform the method in one or more technical solutions in the terminal side when configured to run a computer program; and the third memory 803, the computer program being stored in the third memory 803.

In detail, the third communication interface 801 is configured to receive second information sent by an MN and/or an SN, the second information indicating an association between a candidate PCell and a candidate PSCell. In an embodiment, the third communication interface 801 is also configured to receive the second information carried by third information sent by the MN; or, receive the second information sent by the MN after receiving third information sent by the MN. The third information includes at least one of: configuration information of a CHO of the terminal 800 in a multi-connection; or configuration information of a CPA or CPC.

**In** an embodiment, the third communication interface 801 is also configured to receive the second information carried by fifth information sent by the SN; or, receive the second information sent by the SN after receiving fifth information sent by the SN, the fifth information including configuration information of a CPC.

In an embodiment, the third processor 802 is configured to perform measurement preferentially on a candidate PSCell associated with the candidate PCell in the case that a CHO of a PCell is triggered.

**In** an embodiment, the third processor 802 is also configured to not perform measurement on a candidate PSCell that is not associated with the candidate PCell.

In an embodiment, the third processor 802 is also configured to perform a CHO of a PCell preferentially in the case that the CPC or the CPA and the CHO of the PCell are triggered simultaneously.

In an embodiment, the third processor 802 is also configured to perform measurement preferentially on a first candidate PSCell associated with the candidate PCell in the case that a CHO of a PCell fails and the first candidate PCell is selected.

It should be noted that the detailed process of the third communication interface 801 and the third processor 802 may be understood with reference to the above method, which will not be repeated here.

In the actual application, components in the terminal 800 are coupled together by a bus system 804. It is understood that the bus system 804 is configured to implement the connection communication between these components. Besides data buses, the bus system 804 also includes a power bus, a control bus and a status signal bus. However, for clarity, each bus is labeled as the bus system 804 in FIG. 8.

The third memory 803 in embodiments of the disclosure is configured to store various types of data to support the operation of the terminal 800. Examples of such data include any computer program configured to operate on the terminal 800.

The method in the embodiments of the disclosure may be applied to, or implemented by, the third processor 802. The third processor 802 may be an integrated circuit chip with a signal processing capability. In the implementation process, each step of the method may be completed by an integrated logic circuit of the hardware or instructions in the form of software in the third processor 802. The third processor 802 may be a general-purpose processor, or a DSP; or other programmable logic device, a split gate or transistor logic device, a discrete hardware component, etc. The third processor 802 may implement or execute the method, steps and logic block diagrams disclosed in embodiments of the disclosure. The general-purpose processor may be a microprocessor or any regular processor. It may be embodied that the steps in combination with the method in embodiments of the disclosure may be directly completed by the execution by a hardware decoding processor, or by a combination of hardware and software modules in a decoding processor. The software module may be located in a storage medium, and the storage medium is located in the third memory 803. The third processor 802 reads the information in the third memory 803 and completes the steps of the above method in combination with the hardware of the third processor 802.

In an exemplary embodiment, the terminal 800 may be implemented by one or more ASICs, DSPs, PLDs, CPLDs, FPGAs, general-purpose processors, controllers, MCUs, microprocessors, or other electronic components, to perform the above method.

It is understood that the memories (the first memory 603, the second memory 703, and the third memory 803) in embodiments of the disclosure may be a volatile memory or non-volatile memory, and may include both the volatile memory and the non-volatile memory. The non-volatile memory may be a read only memory (ROM), a programmable read-only memory (PROM), an erasable programmable read-only memory (EPROM), an electrically erasable programmable read-only memory (EEPROM), a ferromagnetic random access memory (FRAM), a flash memory, a magnetic surface memory, an optical disc, or a compact disc read-only memory (CD-ROM). The magnetic surface memory may be a disk memory or a magnetic tape memory. The volatile memory may be a random access memory (RAM), which is used as an external cache. By illustrative but not restrictive description, multiple forms of RAMs are available, such as a static random access memory (SRAM), a synchronous static random access memory (SSRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a syncLink dynamic random access memory (SLDRAM), and a direct rambus random access memory (DRRAM). The memories in the embodiments of the disclosure are intended to include, but are not bounded to, these and any other suitable type of memories.

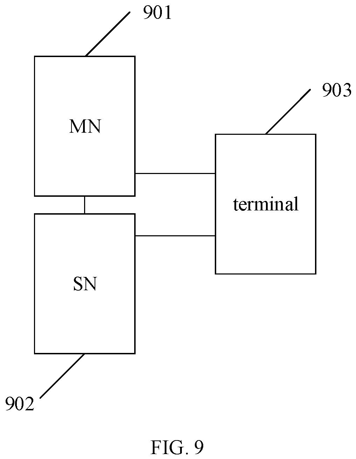

In order to implement the method in embodiments of the disclosure, embodiments of the disclosure also provide a communication system. As illustrated in FIG. 9. The communication system includes: an MN 901, an SN 902 and a terminal 903. It should be noted that the detailed processes of the MN 901, the SN 902 and the terminal 903 are described above in detail, which will not be repeated here.

**In** an exemplary embodiment, embodiments of the disclosure also provide a storage medium, that is, a computer storage medium, particularly a computer-readable storage medium, for example, including the first memory 603 for storing the computer program. The computer program may be executed by the first processor 602 of the MN 600 to complete the steps in the above method in the MN side. For another example, the storage medium includes the second memory 703 for storing the computer program, and the computer program may be executed by the second processor 702 of the SN 700 to complete the steps in the above method in the SN side. For another example, the storage medium includes the third memory 803 for storing the computer program, and the computer program may be executed by the third processor 802 of the terminal 800 to complete the steps in the above method in the terminal side. The computer-readable storage medium may be an FRAM, an ROM, a PROM, an EPROM, an EEPROM, a Flash Memory, a magnetic surface memory, an optical disc, or a CD-ROM memory.

**It** should be noted that "first", "second", etc., are used to distinguish similar objects and are not necessarily used to describe a detailed order or precedence.

In addition, the technical solutions in embodiments of the disclosure may be arbitrarily combined without conflict.

The above is only an optimal embodiment of this disclosure and is not to bound the scope of protection of the disclosure.

## Claims

1. A communication method, applied to a master node (MN), comprising:
negotiating first information with a secondary node (SN) or sending first information to an SN, the first information comprising configuration of upper bound relevant information of a candidate primary secondary cell (PSCell) configurable for a terminal.

2. The method of claim 1, wherein the first information comprises at least one of:
a maximum quantity of the candidate PSCell;
a maximum quantity of a candidate frequency;
a maximum quantity of a candidate measurement identity;
a maximum quantity of a candidate PSCell at each frequency; or
a maximum quantity of a conditional PSCell change (CPC).

3. The method of claim 1, further comprising:
sending second information to the terminal, the second information indicating an association between a candidate primary cell (PCell) and the candidate PSCell.

4. The method of claim 3, wherein sending the second information to the terminal comprises:
sending the second information carried by third information to the terminal; or, sending the second information to the terminal after sending third information to the terminal, the third information comprising at least one of:
configuration information of a conditional hand over (CHO) of the terminal in a multi-connection; or
configuration information of a conditional PSCell addition (CPA) or conditional PSCell change (CPC).

5. The method of any one of claims 1 to 4, further comprising:
receiving fourth information sent by the SN, the fourth information comprising configuration information of the candidate PSCell configured by the SN for the terminal, and the fourth information comprising at least one of:
a quantity of the candidate PSCell;
a quantity of the candidate frequency;
a quantity of the candidate measurement identity;
a quantity of the candidate PSCell at each frequency; or
a quantity of the CPC.

6. A communication method, applied to a secondary node (SN), comprising:
negotiating first information with a master node (MN) or receiving first information sent by an MN, the first information comprising configuration of upper bound relevant information of a candidate primary secondary cell (PSCell) configurable for a terminal.

7. The method of claim 6, wherein the first information comprises at least one of:
a maximum quantity of the candidate PSCell;
a maximum quantity of a candidate frequency;
a maximum quantity of a candidate measurement identity;
a maximum quantity of a candidate PSCell at each frequency; or
a maximum quantity of a conditional PSCell change (CPC).

8. The method of claim 6, further comprising:
sending second information to the terminal, the second information indicating an association between a candidate primary cell (PCell) and the candidate PSCell.

9. The method of claim 8, wherein sending the second information to the terminal comprises:
sending the second information carried by fifth information to the terminal; or, sending the second information to the terminal after sending fifth information to the terminal, the fifth information comprising configuration information of a conditional PSCell change (CPC).

10. The method of any one of claims 6 to 9, further comprising:
sending fourth information to the MN, the fourth information comprising configuration information of the candidate PSCell configured by the SN for the terminal, and the fourth information comprises at least one of:
a quantity of the candidate PSCell;
a quantity of the candidate frequency;
a quantity of the candidate measurement identity;
a quantity of the candidate PSCell at each frequency; or
a quantity of the CPC.

11. A communication method, applied to a terminal, comprising:
receiving second information sent by a master node (MN) and/or a secondary node (SN), the second information indicating an association between a candidate primary cell (PCell) and a candidate primary secondary cell (PSCell).

12. The method of claim 11, wherein receiving the second information sent by the MN comprises:
receiving the second information carried by third information sent by the MN; or, receiving the second information sent by the MN after receiving third information sent by the MN, the third information comprising at least one of:
configuration information of a conditional hand over (CHO) of the terminal in a multi-connection; or
configuration information of a conditional PSCell addition (CPA) or conditional PSCell change (CPC).

13. The method of claim 11, wherein receiving the second information sent by the SN comprises:
receiving the second information carried by fifth information sent by the SN; or, receiving the second information sent by the SN after receiving fifth information sent by the SN, the fifth information comprising configuration information of a conditional PSCell change (CPC).

14. The method of any one of claims 11 to 13, further comprising:
in the case that a CHO of a PCell is triggered, performing measurement preferentially on a candidate PSCell associated with the candidate PCell.

15. The method of claim 14, further comprising:
not performing measurement on a candidate PSCell that is not associated with the candidate PCell.

16. The method of any one of claims 11 to 13, further comprising:
in the case that the CPC or CPA and the CHO of the PCell are triggered simultaneously, performing a CHO of a PCell preferentially.

17. The method of any one of claims 11 to 13, further comprising:
in the case that a CHO of a PCell fails and a first candidate PCell is selected, performing measurement preferentially on a candidate PSCell associated with the first candidate PCell.

18. A communication device, comprising:
a first communicating unit, configured to negotiate first information with a secondary node (SN) or send first information to an SN, the first information comprising configuration of upper bound relevant information of a candidate primary secondary cell (PSCell) configurable for a terminal.

19. A communication device, comprising:
a second communicating unit, configured to negotiate first information with a master node (MN) or receive first information sent by an MN, the first information comprising configuration of upper bound relevant information of a candidate primary secondary cell (PSCell) configurable for a terminal.

20. A communication device, comprising:
a third communicating unit, configured to receive second information sent by a master node (MN) and/or a secondary node (SN), the second information indicating an association between a candidate primary cell (PCell) and a candidate primary secondary cell (PSCell).

21. A master node (MN), comprising a first communication interface and a first processor, wherein
the first communication interface is configured to negotiate first information with a secondary node (SN) or send first information to an SN, the first information comprising configuration of upper bound relevant information of a candidate primary secondary cell (PSCell) configurable for a terminal.

22. A secondary node (SN), comprising a second communication interface and a second processor, wherein
the second communication interface is configured to negotiate first information with a master node (MN) or receive first information sent by an MN, the first information comprising configuration of upper bound relevant information of a candidate primary secondary cell (PSCell) configurable for a terminal.

23. A terminal, comprising a third communication interface and a third processor, wherein
the third communication interface is configured to receive second information sent by a master node (MN) and/or a secondary node (SN), the second information indicating an association between a candidate primary cell (PCell) and a candidate primary secondary cell (PSCell).

24. A master node (MN), comprising a first processor and a first memory for storing a computer program capable of running on a processor,
wherein when the first processor is configured to run the computer program, steps of the method of any one of claims 1 to 5 are implemented.

25. A secondary node (SN), comprising a second processor and a second memory for storing a computer program capable of running on a processor,
wherein when the second processor is configured to run the computer program, steps of the method of any one of claims 6 to 10 are implemented.

26. A terminal, comprising a third processor and a third memory for storing a computer program capable of running on a processor,
wherein when the third processor is configured to run the computer program, steps of the method of any one of claims 11 to 17 are implemented.

27. A storage medium for storing a computer program, wherein when the computer program is executed by a processor, steps of the method of any one of claims 1 to 5 are implemented, or steps of the method of any one of claims 6 to 10 are implemented, or steps of the method of any one of claims 11 to 17 are implemented.
